# EUROPEAN PATENT SPECIFICATION

(11) **EP 3 916 398 B1**
(45) Date of publication and mention of the grant of the patent: **18.10.2023**
(21) Application number: 21170590.0
(22) Date of filing: 27.04.2021
(51) Int. Cl.: G01P 3/489, G01P 3/487, F02D 41/00

(54) **CRANK ANGULAR VELOCITY MEASURING DEVICE AND MISFIRE DETECTION DEVICE**
KURBELWINKELGESCHWINDIGKEITSMESSVORRICHTUNG UND FEHLZÜNDUNGSERFASSUNGSVORRICHTUNG
DISPOSITIF DE MESURE DE VITESSE ANGULAIRE DE MANIVELLE ET DISPOSITIF DE DÉTECTION DE RATÉ

(30) Priority: 29.05.2020 JP 2020095090
(43) Date of publication of application: 01.12.2021
(73) Proprietor: HONDA MOTOR CO., LTD., Minato-ku Tokyo 107-8556 (JP)
(72) Inventor: KISHI, Nobuyuki, Tokyo, 107-8556 (JP); UTSUGI, Katsuhiro, Tokyo, 107-8556 (JP); FUKAYA, Shuichi, Tokyo, 107-8556 (JP); TAJIMA, Katsuki, Tokyo, 107-8556 (JP)
(74) Representative: Weickmann & Weickmann PartmbB

(56) References cited:
- EP-A2- 1 396 629
- DE-A1-102014 206 173
- US-A- 4 569 027
- US-A1- 2005 171 724
- US-A1- 2010 181 956

## Description

### Technical Field

The present invention relates to a crank angular velocity measuring device and a misfire detection device for measuring a crank angular velocity using a magnetic sensor output of an AC rotary electric machine that synchronously rotates with a crankshaft of an engine.

### Background Art

In a four-wheel vehicle, one known technique is to detect a misfire of an engine based on a crank angular velocity measured from a time interval at which crank pulses are generated (time between crank pulses). Since a misfire detection parameter (misfire parameter) includes an inter-gear teeth error of the crank pulser rotor, it is necessary to remove the inter-gear teeth error of a crank pulser rotor in order to accurately determine a misfire.

Patent Literature 1 discloses a method for removing the inter-gear teeth error of the crank pulser rotor, which focuses on the fact that a crank angular velocity component caused by inertia torque in a uniform interval explosion engine changes in a generation cycle of a TDC pulse. Patent Literature 2 discloses a technique of obtaining relative values of the crank angular velocity and removing the inter-gear teeth error of the crank pulser rotor based on an integrated value of the relative values.

### Citation List

### Patent Literatures

Patent Literature 1: JP 2008-111354 A
Patent Literature 2: WO 2018 -179340

DE 10 2014 206173 A1 shows an AC rotary machine such as a starter motor rotates synchronously with a crankshaft, and in which three magnetic sensors are provided to generate three phase-shifted pulse signals which have signal edges which under ideal conditions occur at equal time intervals when the sensor is rotating at a constant speed, and which represent the UVW phases of the rotary electric machine, so as to monitor the rotation of the crankshaft of an engine by evaluating pulse signals representing the UVW phases of the electric machine. There, three phase-shifted pulse signals are derived from the electric machine having a rotor with permanent magnets, and a speed value is derived by determining the time between subsequent corresponding (e.g. rising) pulse edges on different channels UVW, assuming that the edges on different channels would be equally distributed.

In US 2005/171724 A1, the angular speed of an electrical machine is determined on the basis of three phase-shifted signals derived from Hall sensors. The times of the successive rising edges on the three signal channels are evaluated, and each speed determination is based on a full cycle of the signal on a particular channel.

### Summary of Invention

### Technical Problem

In recent years, from a viewpoint of improving repairability and protecting the environment, adoption of misfire detection technology for motorcycles has been studied. A method for removing an inter-gear teeth error of a crank pulser rotor disclosed in Patent Literature 1 is based on the premise that a uniform interval explosion engine is employed, and a crank pulser rotor system is installed. Therefore, Patent Literature 1 cannot be applied to a vehicle that does not employ the crank pulser rotor system, a single-cylinder engine, or a multi-cylinder engine with a non-uniform interval explosion.

Patent Literature 2 is capable of eliminating a fixed error component, such as an inter-gear teeth error of the crank pulser rotor, regardless of whether the engine adopts a uniform or non-uniform interval explosion. On the other hand, the crank angular velocity can also be measured by using a magnetic sensor to detect a rotational speed of a magnet provided in an ACG starter motor and rotating synchronously with a crankshaft, without using the crank pulser rotor.

A function and sensitivity of the magnetic sensor change and deteriorate due to an environmental change, such as temperature, humidity, and atmospheric pressure, and aging. Therefore, in measurements using the magnetic sensor, a fluctuation error component depending on the environmental change and aging need to be considered, in addition to the fixed error component depending on the mounting accuracy. However, Patent Literature 2 can eliminate the fixed error component, but not a fluctuation error component.

It is therefore an object of the present invention to provide, without installing the crank pulser rotor system, a crank angular velocity measuring device and a misfire detection device that are capable of accurately measuring the crank angular velocity by eliminating an error component that fluctuates by the environmental change and aging included in a measurement error of the crank angular velocity, and accurately determining a misfire based on a measurement result of the crank angular velocity.

### Solution to Problem

In order to achieve the above object the present invention provides, a crank angular velocity measuring device according to claim 1, and a misfire detection device according to claim 2.
(1) The crank angular velocity measuring device includes an AC rotary electric machine that rotates synchronously with a crankshaft and is provided with a rotor in which S-pole and N-pole permanent magnets are alternately and circumferentially arranged at equal intervals, and first, second, and third magnetic sensors that detect a magnetization boundary between the permanent magnets; a clocking means that counts a first elapsed time from detection of the magnetization boundary by the first magnetic sensor to detection by the second magnetic sensor, a second elapsed time from detection of the magnetization boundary by the second magnetic sensor to detection by the third magnetic sensor, and a third elapsed time from detection of the magnetization boundary by the third magnetic sensor to detection by the first magnetic sensor; and a means that calculates a crank angular velocity based on a moving average of the first, second, and third elapsed times.
(2) The means that calculates the crank angular velocity repetitively calculates an average of the first elapsed time from detection of the nth magnetization boundary by the first magnetic sensor to detection by the second magnetic sensor, the second elapsed time from detection of the nth magnetization boundary by the second magnetic sensor to detection by the third magnetic sensor, and the third elapsed time from detection of the nth magnetization boundary by the third magnetic sensor detects to detection of the (n+1)th magnetization boundary by the first magnetic sensor; an average of the second elapsed time from detection of the nth magnetization boundary by the second magnetic sensor to detection by the third magnetic sensor, the third elapsed time from detection of the nth magnetization boundary by the third magnetic sensor to detection of the (n+1)th magnetization boundary by the first magnetic sensor, and the first elapsed time from detection of the (n+1)th magnetization boundary by the first magnetic sensor to detection by the second magnetic sensor; and an average of the third elapsed time from detection of the nth magnetization boundary by the third magnetic sensor to detection of the (n+1)th magnetization boundary by the first magnetic sensor, the first elapsed time from detection of the (n+1)th magnetization boundary by the first magnetic sensor to detection by the second magnetic sensor, and the second elapsed time from detection of the (n+1)th magnetization boundary by the second magnetic sensor to detection by the third magnetic sensor.
(3) The misfire detection device includes an AC rotary electric machine that rotates synchronously with a crankshaft and is provided with a rotor in which S-pole and N-pole permanent magnets are alternately and circumferentially arranged at equal intervals, and first, second, and third magnetic sensors that detect a magnetization boundary between the permanent magnets; a clocking means that counts a first elapsed time from detection of the magnetization boundary by the first magnetic sensor to detection by the second magnetic sensor, a second elapsed time from detection of the magnetization boundary by the second magnetic sensor to detection by the third magnetic sensor, and a third elapsed time from detection of the magnetization boundary by the third magnetic sensor to detection by the first magnetic sensor; a means that calculates a crank angular velocity based on a moving average of the first, second, and third elapsed times; and a misfire determining means for determining a misfire of an engine based on a crank angular velocity calculation result.
(4) The means that calculates the crank angular velocity repetitively calculates an average of the first elapsed time from detection of the nth magnetization boundary by the first magnetic sensor to detection by the second magnetic sensor, the second elapsed time from detection of the nth magnetization boundary by the second magnetic sensor to detection by the third magnetic sensor, and the third elapsed time from detection of the nth magnetization boundary by the third magnetic sensor to detection of the (n+1)th magnetization boundary by the first magnetic sensor; an average of the second elapsed time from detection of the nth magnetization boundary by the second magnetic sensor to detection by the third magnetic sensor, and the third elapsed time from detection of the nth magnetization boundary by the third magnetic sensor to detection of the n+1 magnetization boundary by the first magnetic sensor, and the first elapsed time from detection of the (n+1)th magnetization boundary by the first magnetic sensor to detection by the second magnetic sensor; and an average of the third elapsed time from detection of the nth magnetization boundary by the third magnetic sensor detects to detection of the (n+1)th magnetization boundary by the first magnetic sensor, the first elapsed time from detection of the (n+1)th magnetization boundary by the first magnetic sensor to detection by the second magnetic sensor, and the second elapsed time from detection of the (n+1)th magnetization boundary by the second magnetic sensor to detection by the third magnetic sensor.

### Advantageous Effects of Invention

(1) According to a crank angular velocity measuring device of the present invention, when a crank angular velocity is measured by using an output of a magnetic sensor that detects an UVW phase of an AC rotary electric machine that synchronously rotates with a crankshaft, the crank angular velocity can be accurately measured, even when an error occurs in a measured value of the crank angular velocity due to a change in a mutual interval or function of the magnetic sensor caused by environmental or temporal influence, because the error is canceled and eliminated from the crank angular velocity in a calculation process of the present invention.
(2) According to a misfire detection device of the present invention, when the crank angular velocity is measured by using an output of the magnetic sensor that detects the UVW phase of the AC rotary electric machine that synchronously rotates with the crankshaft, the crank angular velocity can be accurately measured, even when an error occurs in a measured value of the crank angular velocity due to a change in the mutual interval or function of the magnetic sensors caused by environmental or temporal influence, because the error is canceled and eliminated from the crank angular velocity in the calculation process of the present invention. As a result, a misfire can be determined with high accuracy.

### Brief Description of Drawings

FIG. 1 is a block diagram showing a configuration of a misfire detection device according to the present invention.
FIG. 2 is a block diagram showing a configuration of a crank angular velocity measurement unit according to the present invention.
FIG. 3 is a time chart showing a relationship between a crank angle and an output from each magnetic sensor.
FIG. 4 is a diagram for explaining a principle of canceling a mutual interval error of the magnetic sensor.
FIG. 5 is a diagram showing a method for calculating a moving average of an elapsed time Δt.
FIG. 6 is a diagram explaining a function of a 720-degree filter processing unit.
FIG. 7 is a diagram explaining a function of a relative angular velocity calculation unit.
FIG. 8 is a diagram explaining a function of an integration angular velocity calculation unit.
FIG. 9 is a diagram showing an example of a result of theoretical calculation of an inertia torque.
FIG. 10 is a diagram showing an example of a relative value of a crank angular velocity change amount dω due to the inertia torque with respect to a compression top dead center.
FIG. 11 is an example of a pumping torque component.
FIG. 12 is a diagram explaining a function of a crank angular velocity measurement error removal unit.
FIG. 13 shows an example (no misfire) of a misfire determination method in which relative angular velocities are obtained from crank angular velocities and their integrated value is used as a misfire parameter.
FIG. 14 shows an example of a misfire determination method (misfire) in which relative angular velocities are obtained from crank angular velocities and their integrated value is used as a misfire parameter.

### Description of Embodiments

An embodiment of the present invention will be described below in detail with reference to the drawings. First, an outline of a misfire determination method using a crank angular velocity measured by a crank angular velocity measuring method of the present invention will be described, and then the embodiment will be described in detail.

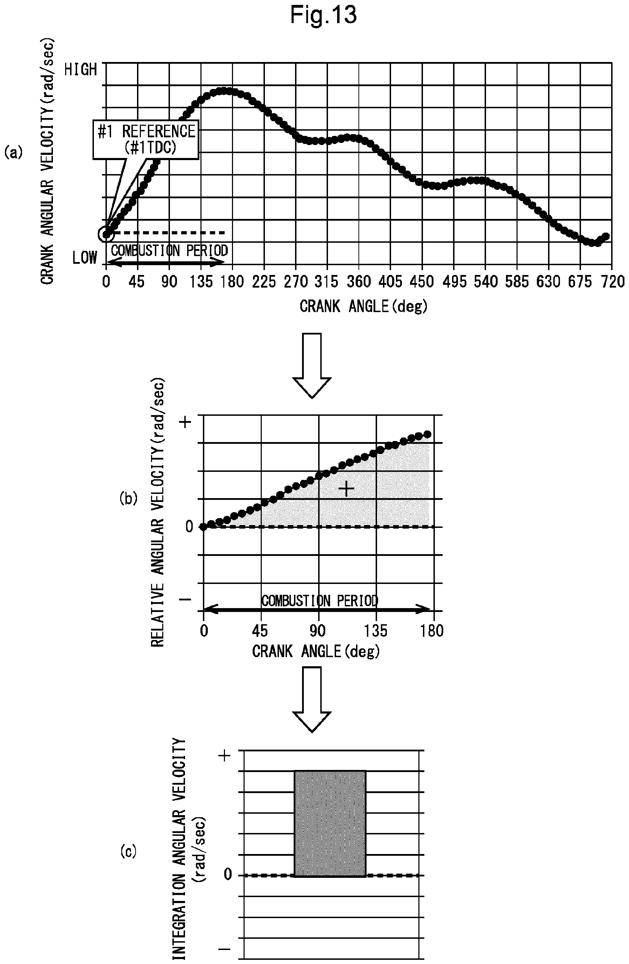

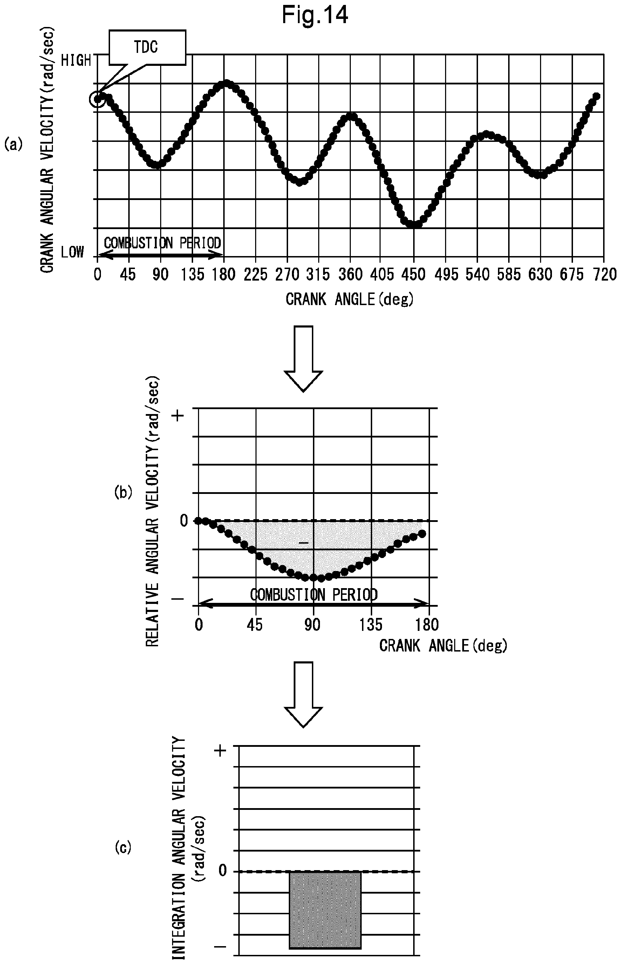

FIG. 13 and FIG. 14 are diagrams showing examples of a misfire determination method in which a relative angular velocity [FIGS. 13(b) and 14(b)] is obtained from a measured value [FIGS. 13(a) and 14(a)] of a crank angular velocity, and then its integrated value (integration angular velocity) [FIGS. 13(c) and 14(c)] is obtained as a misfire parameter. In FIGS. 13(a) and 14(a), a horizontal axis shows a crank angle with a compression top dead center as an origin, and a vertical axis shows the crank angular velocity. The relative angular velocity of the crank angular velocity is calculated by subtracting a reference angular velocity detected near the compression top dead center of each cylinder of the engine from a measurement result of the crank angular velocity at each crank angle. FIG. 13 shows a case where combustion is normally performed, and FIG. 14 shows a case where misfire occurs.

The relative angular velocity increases when combustion is normally performed in a combustion process after the compression top dead center of the engine, but decreases when a misfire occurs (FIGS. 13(b) and 14(b)). Therefore, the integration angular velocity obtained by integrating the relative angular velocity within a predetermined crank angle range becomes a positive value when the combustion is normally performed, and becomes a negative value when the misfire occurs. The integration angular velocity can thus be used as a parameter for determining a misfire cylinder (FIGS. 13(c) and 14(c)).

However, the integration angular velocity includes, in addition to a combustion torque, angular velocity components that fluctuate due to a measurement error of the crank angular velocity, noise caused by a dynamic change of a sensor gap, load torque, friction, inertia torque, pumping torque, or the like. Therefore, in order to accurately determine a misfire, it is necessary to remove all of these fluctuation components from the integration angular velocity.

Among these fluctuation components, the noise, load torque, friction, and inertia torque are known to be eliminated by statistical processing, engine control, or theoretical calculation. The pumping torque can be removed by the technique disclosed in Patent Literature 2. Among measurement errors of the crank angular velocity, a fixed error can be removed by the technique disclosed in Patent Literature 2, but an effective removal method has not yet been established for errors that change due to environmental or temporal influence.

Errors included in the measurement errors of the crank angular velocity that change due to environmental or temporal influence are, for example, errors caused by positional deviation of a magnetic sensor due to a temperature characteristic variation of the magnetic sensor or deformation of a magnetic sensor holding member, and a response change of the magnetic sensor due to aging.

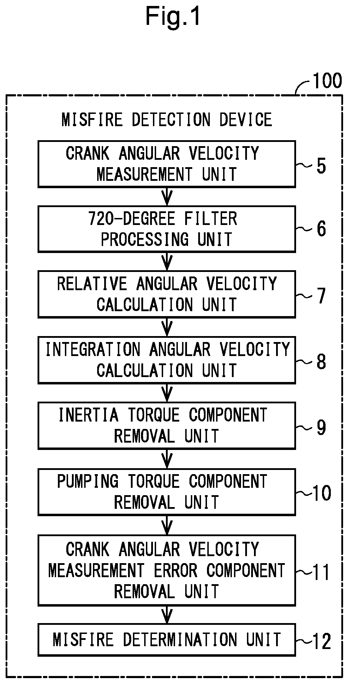

FIG. 1 is a block diagram showing a configuration of a misfire detection device of the present invention. Here, a motorcycle equipped with a 4-cycle single-cylinder engine E and an ACG starter motor (three-phase AC rotary electric machine) M will be described as an example.

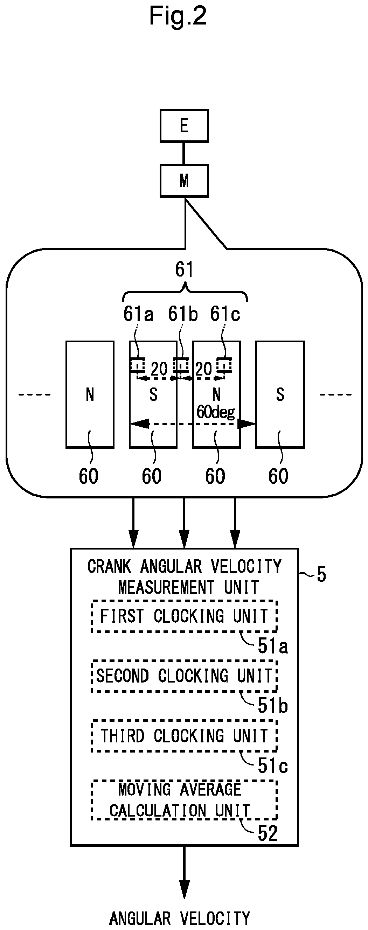

In a misfire detection device 100, a crank angular velocity measurement unit 5 measures an angular velocity of a crankshaft of the engine E. FIG. 2 is a block diagram showing a configuration with respect to crank angular velocity measurement to which the present invention is applied. In the present embodiment, the crank angular velocity is measured based on an angular velocity of an outer rotor of the ACG starter motor M that synchronously rotates with the crankshaft of the engine E.

The ACG starter motor M is provided with the outer rotor in which S-pole and N-pole permanent magnets 60 are circumferentially and alternately arranged at equal intervals (not shown), and first, second, and third magnetic sensors 61 (61a, 61b, and 61c) that detect a magnetization boundary between the permanent magnets 60. In the present embodiment, the magnetization boundary at switching from the S pole to the N pole is detected, but the magnetization boundary at switching from the N pole to the S pole may be detected. The first, second, and third magnetic sensors 61a, 61b, and 61c also function as sensors for detecting a U-phase, V-phase, and W-phase of the ACG starter motor M.

The crank angular velocity measurement unit 5 includes first, second, and third clocking units 51a, 51b, and 51c and a moving average calculation unit 52, so as to calculate the crank angular velocity used for determining a misfire in each stage of engine control. The moving average calculation unit 52 removes noise due to a dynamic change of a gap between the magnetic sensors 61 or between the permanent magnets 60, noise due to a dynamic change of the sensor gap, and errors fluctuating due to aging. The dynamic change of the sensor gap means that a distance between the magnetic sensors 61 and the permanent magnets 60 changes during operation (a change in the gap between the magnetic sensors 61 is caused by aging due to thermal deformation of the sensor holding member).

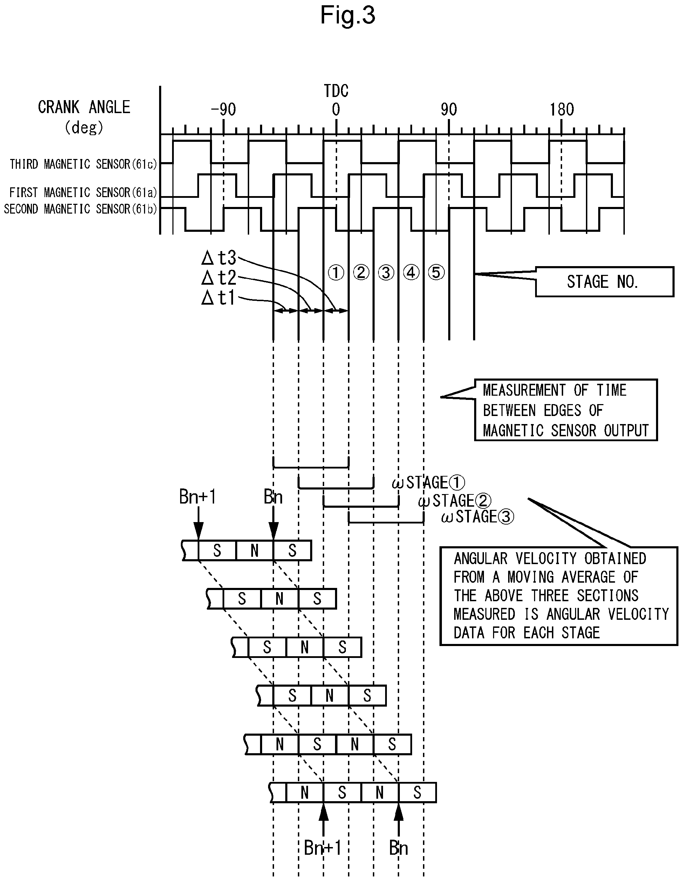

FIG. 3 is a time chart showing a relationship between the crank angle of the engine E and an output signal from each of the magnetic sensors 61.

The first clocking unit 51a counts a first elapsed time Δt1 from detection of the nth magnetization boundary Bn by the first magnetic sensor 61a to detection by the second magnetic sensor 61b. The second clocking unit 51b measures a second elapsed time Δt2 from detection of the magnetization boundary Bn by the second magnetic sensor 61b to detection by the third magnetic sensor 61c. The third clocking unit 51c measures a third elapsed time Δt3 from detection of the magnetization boundary Bn by the third magnetic sensor 61c to detection of a next [(n+1)th] magnetization boundary Bn+1 by the first magnetic sensor 61a.

A moving average calculation unit 52 calculates a moving average of three consecutive elapsed times Δt1, Δt2 and Δt3. In other words, after the first elapsed time Δt1, the second elapsed time Δt2, and the third elapsed time Δt3 are obtained, a moving average (Δt1 + Δt2 + Δt3)/3 is calculated.

Next, after counting a second first-elapsed time Δt1_2 from detection of the magnetization boundary Bn+1 by the first magnetic sensor 61a to detection by the second magnetic sensor 61b, the moving average calculation unit 22 calculates a moving average (Δt2 + Δt3 + Δt1_2)/3 of the second elapsed time Δt2, the third elapsed time Δt3, and the second first-elapsed time Δt1_2.

Then, after counting a second second-elapsed time Δt2 _2 from detection of the magnetization boundary Bn+1 by the second magnetic sensor 61b to detection by the third magnetic sensor 61c, the moving average calculation unit 22 calculates a moving average (Δt3 + Δt1_2 + Δt2_2)/3 of the third elapsed time Δt3, the second first-elapsed time Δt1_2, and the second second-elapsed time Δt2_2.

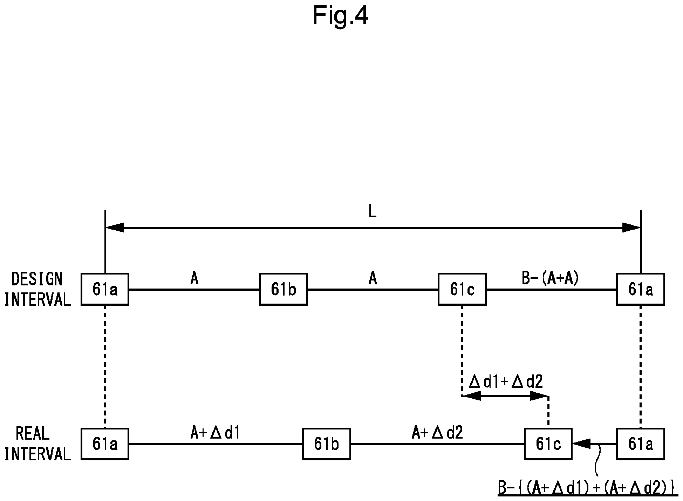

As shown in FIG. 4, when an interval A is between the magnetic sensors 61a and 61b and between 61b and 61c, and an interval B (magnetization interval) between the magnetization boundary Bn and the magnetization boundary Bn+1 is longer than 2A by α (= 2A + α), a measured distance in the first elapsed time Δt1 is A, a measured distance in the second elapsed time Δt2 is A, and a measured distance in the third elapsed time Δt3 is B - 2A.

In the present embodiment, a distance L to measure the crank angular velocity is A + A + (B -2A) = B, which is a sum of the measured distances in the first, second, and third elapsed times Δt1, Δt2, and Δt3. Thus, the distance L is not dependent on A. Since the error of the magnetization interval B is fixed and there is no need to consider environmental change or aging, calibration can be performed by the method in Patent Literature 2.

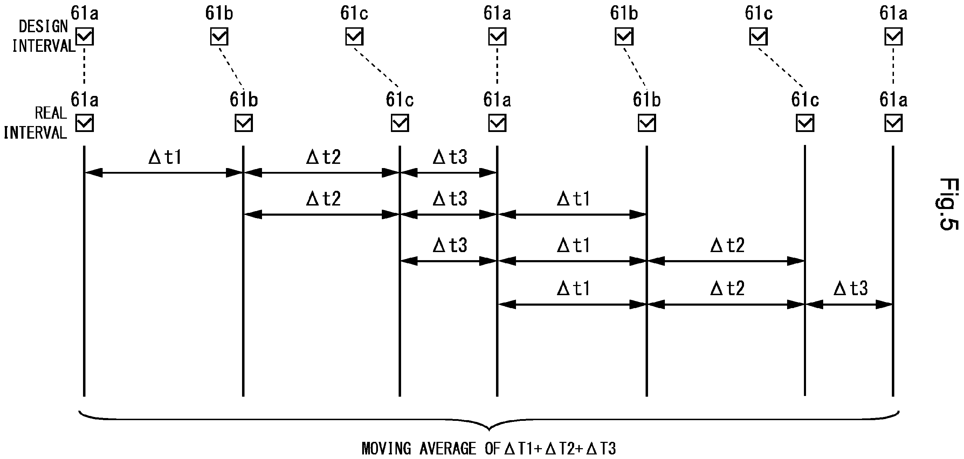

Therefore, as shown in FIG. 5, according to the present embodiment, even when the intervals between the magnetic sensors 61a and 61b and between 61b and 61c include, in addition to the design interval A, errors Δd1 and Δd2 that are combination of manufacturing errors, such as machining accuracy and assembling accuracy, and fluctuation errors caused by environmental changes and temporal influence, it is possible to measure a crank angular velocity ω that is not affected by the error component included in the output from each of the magnetic sensors 61, regardless of the crank angle.

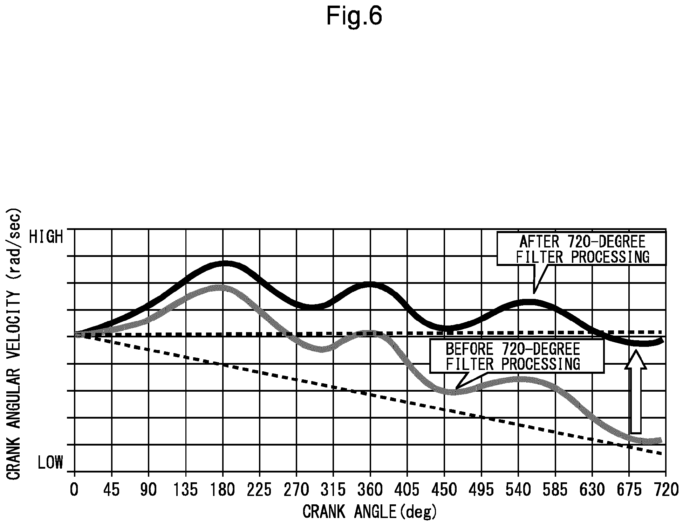

A 720-degree filter processing unit 6 cancels a linear variation in one cycle period and extracts a fluctuation component having a relatively long cycle based on a calculation result (moving average) of the crank angular velocity ω measured as described above. Thus, it is possible to remove an angular velocity fluctuation component due to load torque applied from a tire or an auxiliary machine of a vehicle driven by the engine or friction of a sliding component of the engine. FIG. 6 shows an example that the 720-degree filter is applied to a cycle in which a combustion torque is generated but the cycle is decelerated by a load torque.

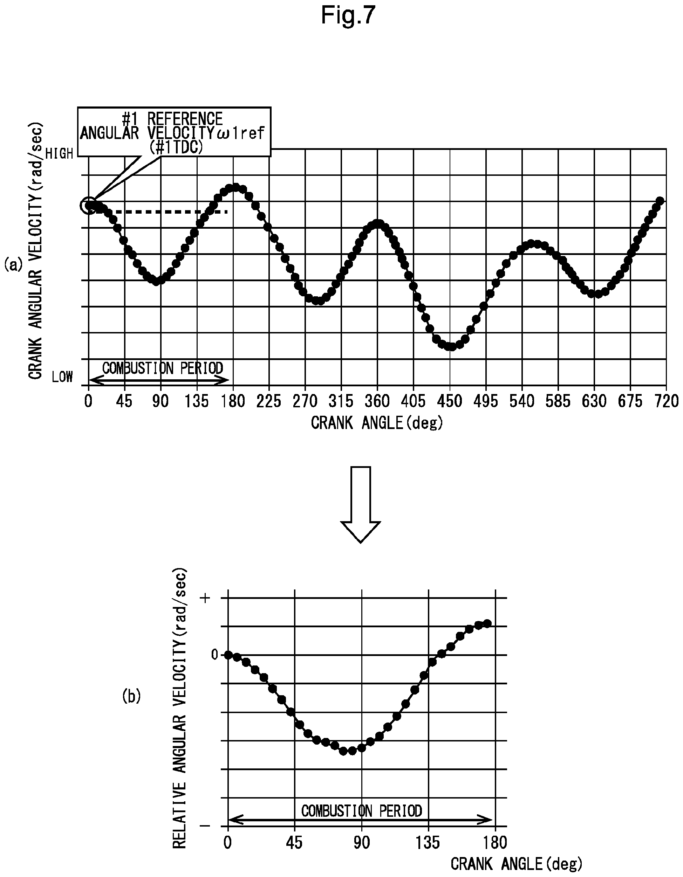

As shown in FIG. 7, a relative angular velocity calculation unit 7 sets the crank angular velocity ω measured near the compression top dead center (TDC: 0-degree crank angle) as a reference angular velocity ω1ref (FIG. 7(a)), and obtains a difference between an angular velocity ω1_i measured at each crank angle i within a crank angle range of 180 degrees from the TDC and the reference angular velocity ω1ref as a relative angular velocity ωω1_i (= ω1_i - ω1ref) (FIG. 7(b)).

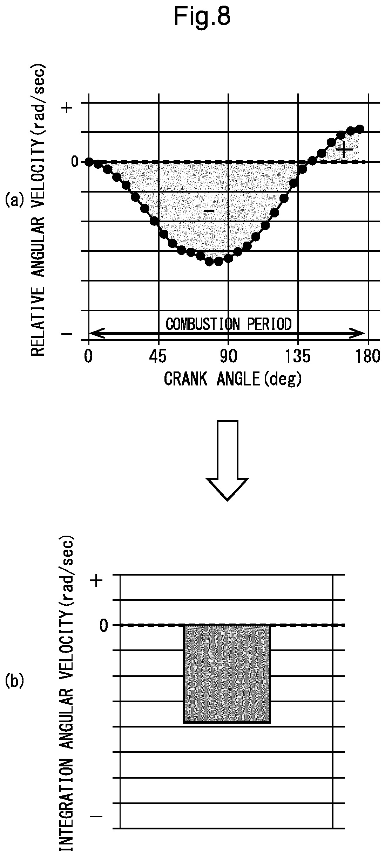

As shown in FIG. 8, an integration angular velocity calculation unit 8 integrates the relative angular velocity ωω1_i within the crank angle range of 180 degrees to calculate an integration angular velocity Σωω1_i.

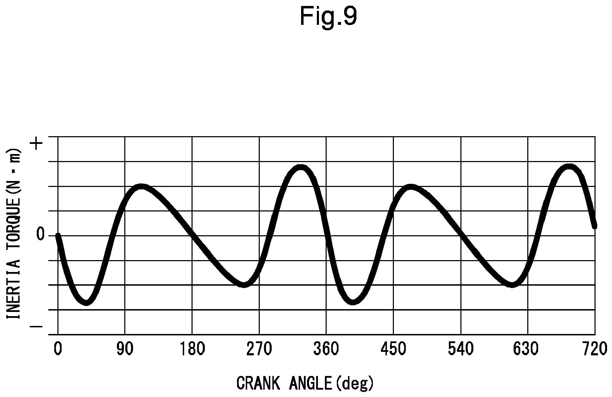

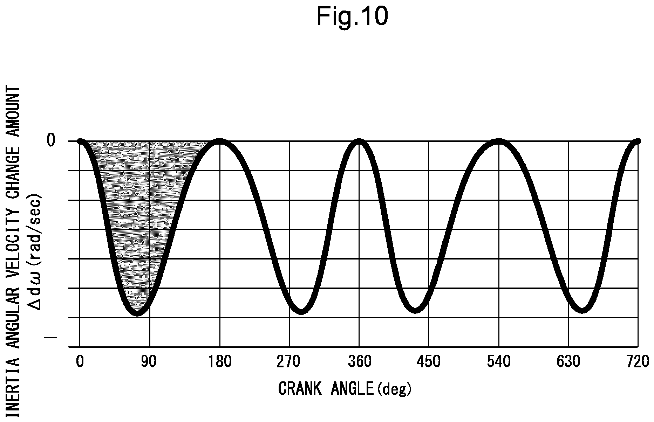

An inertia torque component removal unit 9 calculates a post-removal integration angular velocity Σωω1'_i by removing an inertia torque component from the integration angular velocity Σωω1_i. The inertia torque component can be theoretically calculated by the method disclosed in, for example, Patent Literature 2. FIG. 9 shows, for example, an inertia torque Tq of the single-cylinder engine, and FIG. 10 shows a relative value dω' with respect to the value of the compression top dead center of the crank angular velocity change amount dω due to the inertia torque.

In the present embodiment, the relative value dω' obtained at the unit engine speed is subjected to the same moving average calculation as the moving average calculation unit 52, and a value integrated in the same section as the integration angular velocity calculation unit 8 is calculated to set in the ECU. The inertia torque components at any engine speed can be calculated by multiplying this value by the engine speed. In addition, the post-removal integration angular velocity Σωω1'_i can be calculated by using this value.

A pumping torque component removal unit 10 calculates the post-removal integration angular velocity Σωω1'_i by removing a crank angular velocity component due to torque generated by pump operation of the engine E. The above error removal can be performed by setting the pumping torque component to the ECU obtained, using the method disclosed in Patent Literature 2 (method for measuring the integration angular velocity in a fuel cut state in a standard vehicle without error, and removing the inertia torque component).

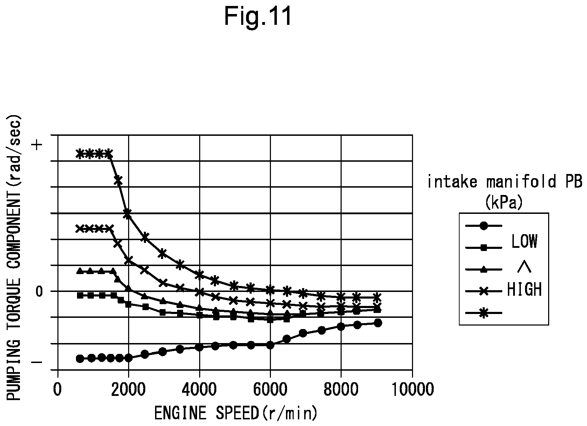

The pumping torque component depends on an engine speed and intake manifold pressure. For example, the pumping torque component of the single-cylinder engine is determined in the form of a map based on the engine speed and the intake manifold pressure shown in FIG. 11. In the present embodiment, this map is set as data in the ECU to use the map for correcting the misfire parameter.

A crank angular velocity measurement error component removal unit 11 removes an integration angular velocity error due to a fixed error, such as an inter-gear teeth error of the pulser rotor and a magnetization position deviation in the present embodiment. The above error removal is performed by applying the inter-gear teeth error removal method disclosed in Patent Literature 2 (the inertia torque and pumping torque components previously set in the ECU are subtracted from the integration angular velocity calculated in the fuel cut state, and this is divided by a reference angular velocity ωref1 to calculate a coefficient Kpul1 for calculating a crank angular velocity measurement error due to the inter-gear teeth error per unit rotational speed. After the coefficient Kpul1 is stored in the ECU, an error component at an arbitrary engine speed is obtained by multiplying the reference angular velocity ωref1 by the coefficient Kpul1, and the error component is removed from the integration angular velocity.)

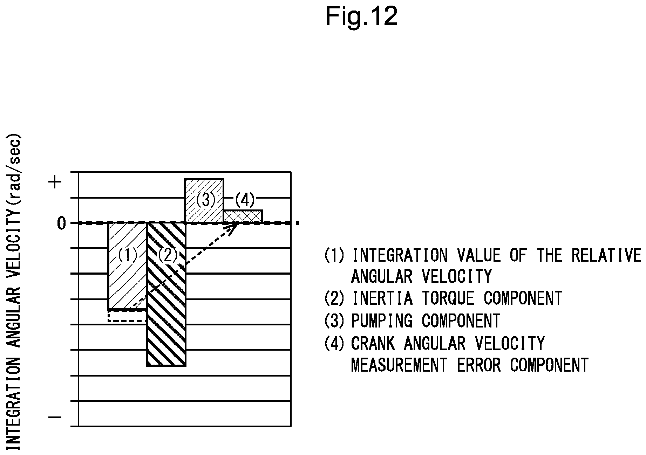

FIG. 12 shows an example in which the inertia torque component (2) and the pumping torque component (3) are removed from the integrated value (1) of the relative angular velocity to extract the crank angular velocity measurement error component (4).

In the present embodiment, a value obtained by removing the crank angular velocity measurement error component from the post-removal integration angular velocity Σωω1'_i is set as the misfire parameter. A misfire determination unit 12 determines the presence of misfire based on the misfire parameter.

According to the present embodiment, when a misfire is determined based on the crank angular velocity measured by using the output of the magnetic sensors that detect the UVW phase of the AC rotary electric machine synchronously rotating with the crankshaft, even when an error occurs in the measured value of the crank angular velocity due to a change in the mutual interval or function of the magnetic sensors by environmental and temporal influence, the error is canceled by the calculation process of the present invention to eliminate the error from the crank angular velocity. Therefore, the crank angular velocity can be accurately measured, and as a result, it is possible to determine a misfire with high accuracy.

The above embodiment refers to the example of application to the single-cylinder engine. However, the present invention is not limited thereto, and can be similarly applied to a multi-cylinder engine. In this case, the engine can be either a uniform interval explosion engine or a non-uniform interval explosion engine.

The AC rotary electric machine (M) rotates synchronously with the crankshaft and is provided with a rotor in which S-pole and N-pole permanent magnets (60) are arranged circumferentially, and first, second, and third magnetic sensors (61) that detect a magnetization boundary between the permanent magnets. A clocking means (51a, 51b, and 51c) counts a first elapsed time from detection of the magnetization boundary by a first magnetic sensor (61a) to detection by a second magnetic sensor (61b), a second elapsed time from detection of the magnetization boundary by the second magnetic sensor (61b) to detection by a third magnetic sensor (61c), and a third elapsed time from detection of the magnetization boundary by the third magnetic sensor (61c) to detection by the first magnetic sensor (61a). A moving average calculating means (52) calculates the crank angular velocity based on a moving average of the first, second, and third elapsed times.

### Reference Signs List

- 5: crank angular velocity measurement unit
- 6: 720-degree filter processing unit
- 7: relative angular velocity calculation unit
- 8: integration angular velocity calculation unit
- 9: inertia torque component removal unit
- 10: pumping torque component removal unit
- 11: crank angular velocity measurement error component removal unit
- 12: misfire determination unit
- 100: misfire detection device

## Claims

1. A crank angular velocity measuring device that is adapted to measure a crank angular velocity of an engine (E), the crank angular velocity measuring device comprising:
an AC rotary electric machine (M) that is configured to rotate synchronously with a crankshaft, the AC rotary electric machine (M) being provided with a rotor in which permanent magnets (60) of an S pole and permanent magnets (60) of an N pole are alternately and circumferentially arranged at equal intervals, and first, second, and third magnetic sensors (61a, 61b, 61c) arranged in this order along a direction aligned with the circumference of the rotor to detect a corresponding magnetization boundary (Bn) of the same polarization change between the permanent magnets (60);
a clocking means (51a, 5 1b, and 51c) that is adapted to count repeatedly for each corresponding magnetization boundary a first elapsed time (Δt1) from detection of the corresponding magnetization boundary by a first magnetic sensor (61a) to detection of the corresponding magnetization boundary by a second magnetic sensor (61b), a second elapsed time (Δt2) from detection of the corresponding magnetization boundary by the second magnetic sensor (61b) to detection of the corresponding magnetization boundary by a third magnetic sensor (61c), and a third elapsed time (Δt3) from detection of the corresponding magnetization boundary by the third magnetic sensor (61c) to detection of the next corresponding magnetization boundary by the first magnetic sensor (61a); and
a moving average calculating means (52) that is configured to calculate repeatedly the crank angular velocity based on a moving average of the first, second, and third elapsed times,
wherein an interval A is between the first and second magnetic sensors (61a and 61b) and between the second and third magnetic sensors (61b and 61c), an interval B between the corresponding magnetization boundary (Bn) and the next corresponding magnetization boundary (Bn+1) is longer than 2A, a measured distance in the first elapsed time (Δt1) is A, a measured distance in the second elapsed time (Δt2) is A, and a measured distance in the third elapsed time (Δt3) is B - 2A, and
whereby the interval B is 60°.

2. A misfire detection device that is adapted to determine a misfire based on a crank angular velocity of an engine (E), the misfire detection device comprising:
a crank angular velocity measuring device according to claim 1,
a misfire determination means (10a) that determines a misfire of the engine based on a calculation result of the crank angular velocity.

## Patentansprüche

1. Kurbelwinkelgeschwindigkeitsmessvorrichtung, die dazu ausgelegt ist, eine Kurbelwinkelgeschwindigkeit eines Motors (E) zu messen, wobei die Kurbelwinkelgeschwindigkeitsmessvorrichtung aufweist:
eine elektrische Wechselstromdrehmaschine (M), die konfiguriert ist, um sich synchron mit einer Kurbelwelle zu drehen, wobei die elektrische Wechselstromdrehmaschine (M) mit einem Rotor versehen ist, in dem Permanentmagnete (60) eines Südpols sowie Permanentmagnete (60) eines Nordpols abwechselnd über den Umfang mit den gleichen Intervallen angeordnet sind, und erste, zweite und dritte Magnetsensoren (61a, 61b, 62c) in dieser Reihenfolge entlang einer mit dem Umfang des Rotors fluchtenden Richtung angeordnet sind, um eine entsprechende Magnetisierungsgrenze (Bn) der gleichen Polarisationsänderung zwischen den Permanentmagneten (60) zu detektieren;
ein Taktgebermittel (51a, 51b, und 51c), das dazu ausgelegt ist, wiederholt für jede entsprechende Magnetisierungsgrenze eine ab der Detektion der entsprechenden Magnetisierungsgrenze durch einen ersten Magnetsensor (61a) bis zur Detektion der entsprechenden Magnetisierungsgrenze durch einen zweiten Magnetsensor (61b) erste abgelaufene Zeit (Δt1), eine ab der Detektion der entsprechenden Magnetisierungsgrenze durch den zweiten Magnetsensor (61b) bis zur Detektion der entsprechenden Magnetisierungsgrenze durch einen dritten Magnetsensor (61c) zweite abgelaufene Zeit (Δt2), sowie eine ab der Detektion der entsprechenden Magnetisierungsgrenze durch den dritten Magnetsensor (61c) bis zur Detektion der nächsten entsprechenden Magnetisierungsgrenze durch den ersten Magnetsensor (61a) dritte abgelaufene Zeit (Δt3) wiederholt zu zählen; und
ein Gleitender-Mittelwert-Berechnungsmittel (52), das konfiguriert ist, um die Kurbelwinkelgeschwindigkeit basierend auf einem gleitenden Mittelwert der ersten, zweiten und dritten abgelaufenen Zeiten wiederholt zu berechnen,
wobei ein Intervall A zwischen den ersten und zweiten Magnetsensoren (61a und 61b) sowie zwischen den zweiten und dritten Magnetsensoren (61b und 61c) liegt, ein Intervall B zwischen der entsprechenden Magnetisierungsgrenze (Bn) und der nächsten entsprechenden Magnetisierungsgrenze (Bn+1) länger als 2A ist, eine in der ersten abgelaufenen Zeit (Δt1) gemessene Distanz A ist, eine in der zweiten abgelaufenen Zeit (Δt2) gemessene Distanz A ist, und eine in der dritten abgelaufenen Zeit (Δt3) gemessene Distanz B-2A ist, und
wodurch das Intervall B 60° ist.

2. Fehlzündungsdetektionsvorrichtung, die dazu ausgelegt ist, basierend auf einer Kurbelwinkelgeschwindigkeit eines Motors (E) eine Fehlzündung zu bestimmen, wobei die Fehlzündungsdetektionsvorrichtung aufweist:
eine Kurbelwinkelgeschwindigkeitsmessvorrichtung nach Anspruch 1,
ein Fehlzündungsbestimmungsmittel (10a), das basierend auf einem Rechenergebnis der Kurbelwinkelgeschwindigkeit eine Fehlzündung des Motors bestimmt.

## Revendications

1. Dispositif de mesure de vitesse angulaire de manivelle qui est adapté pour mesurer une vitesse angulaire de manivelle d'un moteur (E), le dispositif de mesure de vitesse angulaire de manivelle comprenant :
une machine électrique rotative à CA (M) qui est configuré pour tourner de manière synchrone avec une manivelle,
la machine électrique rotative à CA (M) étant dotée d'un rotor, dans lequel des aimants permanents (60) d'un pôle S et des aimants permanents (60) d'un pôle N sont agencés en alternance et
sur la circonférence à intervalles égaux, et des premier, deuxième et troisième capteurs (61a, 61b, 61c) sont agencés dans cet ordre le long d'une direction alignée sur la circonférence du rotor pour détecter une limite de magnétisation correspondante (Bn) du même changement de polarisation entre les aimants permanents (60) ;
un moyen de pointage (51a, 51b et 51c) qui est adapté pour compter de manière répétée pour chaque limite de magnétisation correspondante un premier temps écoulé (Δt1) à partir de la détection de la limite de magnétisation correspondante par un premier capteur magnétique (61a) à la détection de la limite de magnétisation correspondante par un deuxième capteur magnétique (61b), un deuxième temps écoulé (Δt2) à partir de la détection de la limite de magnétisation correspondante par le deuxième capteur magnétique (61b) à la détection de la limite de magnétisation correspondante par un troisième capteur magnétique (61c), et un troisième temps écoulé (Δt3) à partir de la détection de la limite de magnétisation correspondante par le troisième capteur magnétique (61c) à la détection de la prochaine limite de magnétisation correspondante par le premier capteur magnétique (61a) ; et
un moyen de calcul de moyenne mobile (52) qui est configuré pour calculer de manière répétée la vitesse angulaire de manivelle sur la base d'une moyenne mobile des premier, deuxième et troisième temps écoulés,
dans lequel un intervalle A est entre les premier et deuxième capteurs magnétiques (61a et 61b) et entre les deuxième et troisième capteurs magnétiques (61b et 61c), un intervalle B entre la limite de magnétisation correspondante (Bn) et la prochaine limite de magnétique correspondante (Bn+1) est plus long que 2A, une distance mesurée dans le premier temps écoulé (Δt1) est A, une distance mesurée dans le deuxième temps écoulé (Δt2) est A, et une distance mesurée dans le troisième temps écoulé (Δt3) est B-2A, et
moyennant quoi l'intervalle B est de 60°.

2. Dispositif de détection de raté qui est adapté pour déterminer un raté sur la base d'une vitesse angulaire de manivelle d'un moteur (E), le dispositif de détection de raté comprenant :
un dispositif de mesure de vitesse angulaire de manivelle selon la revendication 1,
un moyen de détermination de raté (10a) qui détermine un raté du moteur sur la base d'un résultat de calcul de la vitesse angulaire de manivelle.
